# EUROPEAN PATENT SPECIFICATION

(11) **EP 1 875 806 B1**
(45) Date of publication and mention of the grant of the patent: **16.11.2011**
(21) Application number: 06732381.6
(22) Date of filing: 26.04.2006
(51) Int. Cl.: A22C 11/10, A22C 11/12, A23L 1/00, A23N 17/00, B65B 51/00, A23L 1/31

(54) **METHOD AND DEVICE FOR MANUFACTURING PACKING MATERIAL WITH TWISTED PART**
VERFAHREN UND VORRICHTUNG ZUR HERSTELLUNG VON VERPACKUNGSMATERIAL MIT VERDREHTEM TEIL
PROCÉDÉ ET DISPOSITIF POUR FABRIQUER UN MATÉRIAU D'EMBALLAGE AVEC UNE PARTIE TORSADÉE

(30) Priority: 27.04.2005 JP 2005130207
(43) Date of publication of application: 09.01.2008
(73) Proprietor: Hitec Co., Ltd., Yokohama-shi Kanagawa 226-0026 (JP); SUN TOOL CORPORATION, Osaka-shi, Osaka 533-0005 (JP); Hayashikane Sangyo Co., Ltd., Shimonoseki-shi, Yamaguchi 750-0067 (JP)
(72) Inventor: NAKAMURA, Tatsuro, Kanagawa 226-0026 (JP); NAKAMURA, Shinjiro, Kanagawa 226-0026 (JP); KASAI, Minoru, Kanagawa 226-0026 (JP); MORIMOTO, Masahiko, Osaka-shi, Osaka 533-0005 (JP); YAMAZUMI, Eiji, Osaka-shi, Osaka 533-0005 (JP); MISHIRO, Kenzo, Yamaguchi 750-0067 (JP); FUJIMOTO, Shuji, Yamaguchi 750-0067 (JP)
(74) Representative: Vossius & Partner
(86) International application number: PCT/JP2006/308775
(87) International publication number: WO 2006/118162

(56) References cited:
- EP-A- 0 128 668
- JP-A- 01 030 559
- JP-A- 48 053 886
- JP-A- 2000 513 234
- JP-A- 2001 340 049
- JP-A- 2004 065 167
- JP-A- 2004 131 741
- JP-B- 40 027 509
- US-A- 5 532 014

## Description

### TECHNICAL FIELD

The present invention relates to methods for producing a stuffed product having twisted portions and apparatuses for producing the same.

### BACKGROUND ART

Currently, methods for stuffing edibles into cylindrical edible casings such as collagen casings are used extensively in production of foodstuffs such as sausages and cheese. Additionally, the methods are known to be applied to animal feed in a zoo or feed for farmed fish such as tuna and young yellowtail. Among the products, the sausages or cheese is continuously manufactured at a high speed in a short period of time by heretofore known apparatuses.

An apparatus disclosed in JP-A-40-27509 is one example of the sausage production apparatuses. The apparatus is capable of producing a string of sausages made of a stuffed casing linked via twisted portions. The string of sausages is cooked in a smokehouse, and then separated into pieces by cutting the twisted portions. The collagen casing is not thermally bonded even if it is cooked in the smokehouse. Thus, the casings at both end portions of the individually separated sausages are untwisted. However, the sausage material does not leak from the untwisted casing portions because the sausage material filled into the casing is cured by thermal denaturation.

On the other hand, the animal feed used in the zoo or feed for farmed fish such as tuna and young yellowtail cannot be heat treated because nutrient components, flavor or texture thereof is changed by heating. Thus, casings at both end portions of individually separated feed need to be closed so that the feed material does not leak from the casings at the both end portions.

A method according to the preamble of claim 1 is disclosed in JP-2004-65167 A and is known as the feed production method. According to the method, a casing is twisted at least four times every time the material is stuffed to form feed material stuffed portions and connecting portions. Each of the connecting portions is closed by pressure bonding, fusion bonding by heating, or binding with a string, tape or thread. Furthermore, the publication discloses a method for adhering the connecting portions by applying gelatin to the twisted connecting portions. However, in any of the methods, the twisted portions need to be bound additionally after the formation thereof. Thus, continuous and high-speed production of the feed is infeasible.

As stated above, there have been no continuous high-speed methods for closing connecting portions, capable of preventing untwisting of twisted portions of individually separated stuffed products. Thus, it is impossible to commercialize stuffed products having a fluid content, e.g., feed used without heating.

### DISCLOSURE OF INVENTION

The present invention has been made in view of the above circumstances, and an object of the present invention is to provide methods and apparatuses for producing a stuffed product having twisted portions, capable of forming twisted portions having an adhesive applied thereto and continuously producing a stuffed product having the twisted portions that do not untwist at a high speed, whereby application of an adhesive is not required after formation of the twisted portions. This object is achieved with the features of the claims.

To accomplish the object, the first invention provides a method for producing a stuffed product having twisted portions, the method comprising the steps of: discharging a content from a stuffing tube and stuffing the content into a casing; moving a stuffed casing stuffed with the content in a content discharging direction; applying an adhesive to an outer periphery of the stuffed casing; squeezing the stuffed casing having the adhesive applied thereto; and rotating the stuffed casing having the adhesive applied thereto, thereby forming a twisted portion having the adhesive applied thereto in the squeezed stuffed casing.

The structure of the method eliminates the need for additional application of the adhesive to the twisted portions after completing the formation of the twisted portions, and reduces production time of the stuffed product. When the stuffed product is feed for fish, animals, etc., an edible adhesive such as gelatin is employed. Thus, there is no problem if the adhesive remains in the twisted portions and the other portions of the casing.

In the step of forming the twisted portion according to the first invention, at least a part of the adhesive applied to the outer periphery of the stuffed casing may be wound in the twisted portion to place the adhesive inside the twisted portion. Such a structure allows the twisted portion to be adhered from inside thereof.

In the step of forming the twisted portion according to the first invention, at least a part of an outer periphery of the twisted portion may be covered with at least a part of the adhesive applied to the outer periphery of the stuffed casing. Such a structure allows the twisted portion to be adhered from outside thereof.

The second invention provides an apparatus for producing a stuffed product having twisted portions, the apparatus comprising: a stuffing tube for discharging a content into a casing; an adhesive application nozzle for applying an adhesive to an outer periphery of a stuffed casing stuffed with the content; a stuffed casing rotating unit for rotating the stuffed casing having the adhesive applied thereto; and a linking unit having rotating shafts, pincher members, and a stuffed casing transfer unit, the rotating shafts being provided at positions located in a content discharging direction with respect to the adhesive application nozzle, the pincher members rotating about the rotating shafts and squeezing the stuffed casing, and the stuffed casing transfer unit moving the stuffed casing in the content discharging direction; whereby a twisted portion having the adhesive applied thereto is formed in a squeezed portion of the stuffed casing formed by the pincher members.

The structure of the apparatus eliminates the need for additional application of the adhesive to the twisted portions after completing the formation of the twisted portions, and reduces manufacturing time of the stuffed product. When the stuffed product is feed for fish, animals, etc., an edible adhesive such as gelatin is employed. Thus, there is no problem if the adhesive remains in the twisted portions and the other portions of the casing.

According to the second invention, at least a part of the adhesive applied to the outer periphery of the stuffed casing may be wound in the twisted portion to place the adhesive inside the twisted portion. Such a structure allows the twisted portion to be adhered from inside thereof.

According to the second invention, at least a part of an outer periphery of the twisted portion may be covered with at least a part of the adhesive applied to the outer periphery of the stuffed casing. Such a structure allows the twisted portion to be adhered from outside thereof.

According to the second invention, the adhesive application nozzle may discharge the adhesive continuously. Such a structure simplifies and facilitates the application of the adhesive to the outer periphery of the stuffed casing.

Additionally, according to the second invention, the adhesive application nozzle may discharge the adhesive intermittently. Such a structure reduces the amount of the applied adhesive, and produces the stuffed product where the adhesive is applied only to the twisted portions.

According to the first and the second inventions, the stuffed product having the twisted portions that do not untwist, e.g., a non-heated product having a fluid content can be produced continuously at a high speed.
Furthermore, according to the first and the second inventions, the twisted portions can be adhered from inside thereof, and thus adhesive strength of the twisted portions can be enhanced.
Still furthermore, according to the first and the second inventions, the twisted portions can be adhered from outside thereof, and thus adhesive strength of the twisted portions can be enhanced.

According to the second invention in particular, the adhesive application device can be simply structured, and the production cost can be further reduced. According to the second invention, the amount of the applied adhesive can be decreased, and thus the production cost can be further reduced.

### BRIEF DESCRIPTION OF DRAWINGS

FIG. 1 is a schematic sectional view of an apparatus for producing a stuffed product having twisted portions according to one embodiment of the present invention.
FIG. 2 is a schematic plan view of the apparatus.
FIGS.3 (A)-(C) are schematic sectional side views of the vicinity of a stuffing tube of the apparatus.
FIG. 4 is an enlarged sectional view of the vicinity of a braking member of the apparatus.
FIG. 5 is a schematic dimensional view of a linked stuffed casing produced by a method for producing a stuffed product having twisted portions according to one embodiment of the present invention.
FIG. 6 is a schematic dimensional view of before and after twisting of the stuffed casing according to the method.
FIG. 7 is a schematic illustrative view illustrating the relationship between pincher members of the apparatus and an adhesive on the stuffed casing.
FIG. 8 is a schematic view illustrating the state of the stuffed casing and the adhesive immediately before the formation of the twisted portion in the stuffed casing according to the method.
FIGS. 9(A) and (B) are schematic views illustrating the states of the stuffed casings and the adhesives immediately after the formation of the twisted portions in the stuffed casings according to the method.
FIGS. 10(A)-(D) are enlarged sectional views illustrating the states of the adhesives of the twisted portions of the stuffed casings according to the method.
FIGS. 11(A)-(D) are schematic views illustrating various states of the adhesives on outer peripheries of the twisted portions of the stuffed casings according to the method.
FIG. 12 is a schematic dimensional view illustrating the states of the adhesive on the stuffed casing before and after twisting of the stuffed casing in a method for producing a stuffed product having twisted portions according to another embodiment of the present invention.
FIG. 13 is a schematic view illustrating the state of the stuffed casing and the adhesive immediately before the formation of the twisted portion in the stuffed casing according to the method.
FIG. 14 is an enlarged sectional view of the vicinity of the braking member in a method for producing a stuffed product having twisted portions according to a still another embodiment of the present invention.
FIGS. 15(A) and 15(B) are schematic views illustrating the state of the stuffed casing and the adhesive immediately before formation of the twisted portion in the stuffed casing according to the method.
FIG. 16 is a schematic plan view of an apparatus for producing a stuffed product having twisted portions according to another embodiment of the present invention.
FIG. 17 is a side view of the apparatus.
FIG. 18 is a schematic plan view of an apparatus for producing a stuffed product having twisted portions according to still another embodiment of the present invention.
FIG. 19 is a side view of the apparatus.

### BEST MODE FOR CARRYING OUT THE INVENTION

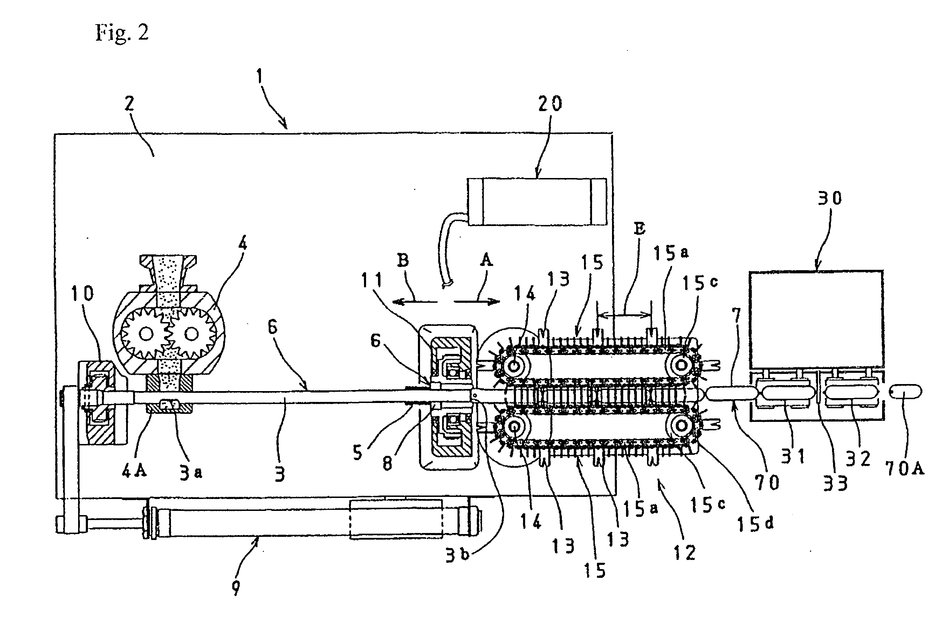

Referring now to the accompanying drawings, an apparatus and a method for producing a stuffed product having twisted portions according to one embodiment of the present invention are described.
A direction of arrow A illustrated in FIG. 2 is termed "rearward" or "content discharging direction," and a direction of arrow B illustrated in FIG. 2 is termed the "forward" or "opposite content discharging direction."

The following describes the present invention taking an apparatus for producing feed for fish, animals, etc. as an example. In actual operation, however, the present invention is not limited to the apparatus. Any casings (artificial casings, natural intestine casings) and any materials for adhesives may be employed as long as they have proper functions. The product manufactured in accordance with the present invention is not limited as long as it is a stuffed casing produced with twisted portions at both ends thereof.

The following describes the method and the apparatus for producing a stuffed product having twisted portions, e.g., feed for large farmed fish such as tuna and young yellowtail, and animal feed in a zoo etc. A numerical reference 1 designates the apparatus for producing a stuffed product having twisted portions according to the present invention mounted on a floor surface FL. Numerical references 2 and 3 designate a main body housing and a stuffing tube, respectively. The stuffing tube 3 is a cylindrical-shaped member having an inlet port 3a through which the feed, i.e., a content is supplied and a discharge port 3b for the content. The inlet port 3a and the discharge port 3b are respectively provided at the front and the distal end of the stuffing tube 3. At the time of stuffing the content, the inlet port 3a communicates with a pump 4 for supplying the content.

An edible casing 5 is fitted to the stuffing tube 3 from the discharge port 3b provided at the distal end of the tube 3. The casing 5 is made of collagen, carrageenan, or the like.

A numerical reference 6 designates a stuffed casing rotating unit for rotating a stuffed casing 7 formed by the casing 5 filled with the content. In the present embodiment, the stuffed casing rotating unit 6 includes the stuffing tube 3 and a braking member 8 to which the distal end of the stuffing tube 3 is fitted at the time of filling the casing 5. However, the structure of the stuffed casing rotating unit 6 varies with changes in the material of the casing 5. For example, the collagen casing or the cellulose casing is rotatably driven by rotation of the braking member 8, and not necessarily driven by the stuffing tube 3. The natural intestine casing is rotatably driven by rotation of the stuffing tube 3, and not necessarily driven by the braking member 8.

The pump 4, a stuffing tube reciprocating unit 9 for moving the stuffing tube 3 forward and backward with respect to the braking member 8, a stuffing tube rotating housing 10 for rotatably driving the stuffing tube 3, a braking member rotating housing 11 for rotatably driving the braking member 8, a linking unit 12 having pincher members 13 for squeezing the stuffed casing 7, a motor 12M for the linking unit for driving the linking unit 12, and an adhesive application unit 20 having an adhesive application nozzle 22 for applying an adhesive 21 to an outer periphery 7A of the stuffed casing 7 are respectively provided in predetermined positions of the main body housing 2.

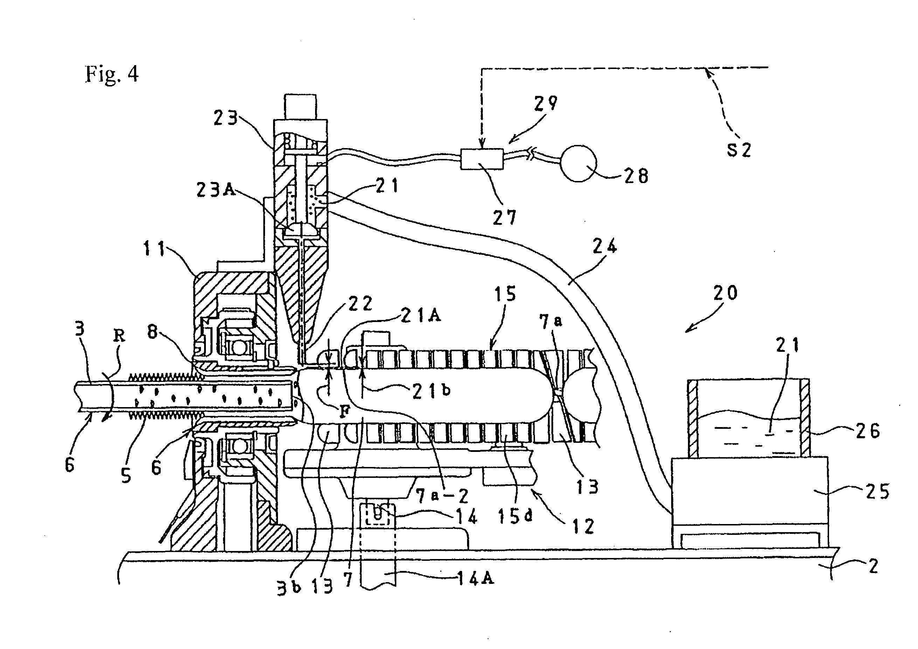

As shown in FIG. 4, the braking member 8 is rotatably supported by the braking member rotating housing 11. The braking member 8 reliably transmits rotation thereof to the stuffed casing 7.

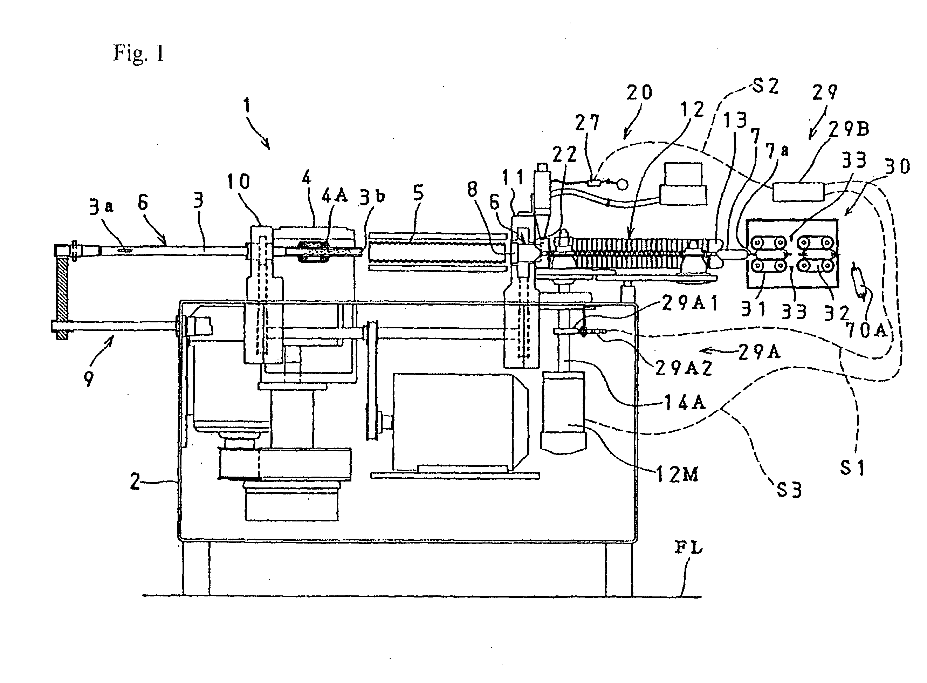

The stuffing tube reciprocating unit 9 causes the stuffing tube 3 supported by a stuffing housing 4A to reciprocate between a standby position shown in FIG. 1 and a stuffing position shown in FIG. 2. The stuffing tube 3 positioned as shown in FIG. 2 stuffs the content into the casing 5 from the discharge port 3b at the distal end of the stuffing tube 3.

The stuffing tube rotating housing 10 rotatably drives the stuffing tube 3 located as shown in FIG. 2. The stuffing tube 3 rotates in synchronism with the braking member 8.

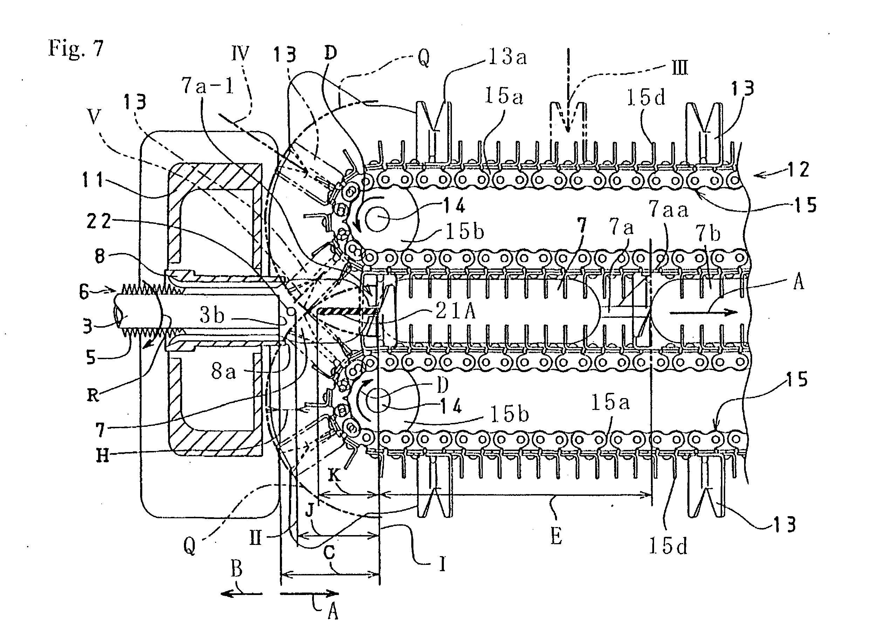

As shown in FIG. 7, the linking unit 12 includes a stuffed casing transfer unit 15 for transferring the stuffed casing 7 pinched by the pincher members 13, 13 rearward (in the direction of arrow A). The pincher members 13, 13 rotate about rotating shafts 14 in the directions of arrows D, and squeeze the stuffed casing 7
at the squeezing position I, thereby forming a squeezed portion 7a-1. The rotating shafts 14 are provided at the position I that is rearward (in the content discharging direction, in the direction of arrow A) with respect to the discharge port 3b of the stuffing tube 3 by a predetermined distance C, i.e., the squeezing position I.

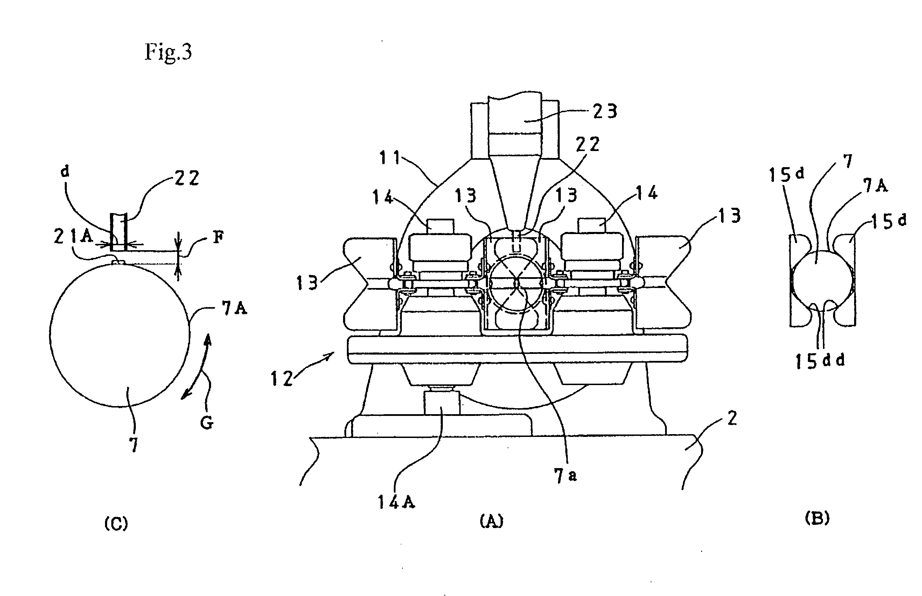

As shown in FIG. 3, a V-shaped portion is formed in each of the pincher members 13. As shown in the figure, the pincher members 13, 13 are positioned to have a gap between the members 13,13 and the outer periphery 7aa of the twisted portion 7a formed between the both members 13, 13, when the left and right pair of the pincher members 13, 13 narrows to the maximum to squeeze the stuffed casing 7.

As shown in FIGS. 2 and 7, the stuffed casing transfer unit 15 includes a left and right pair of endless chains 15a, 15a equipped with the pincher members 13. Equally spaced apart from one another at an interval E, the plurality of pincher members 13 are disposed in the chains 15a. The stuffed product is produced between the pincher members 13, 13, and the length of the product is the sum of the twisted portion 7a and the stuffed portion 7b and equal to the interval E. Each of the chains 15a is suspended between a drive sprocket 15b secured to the rotating shaft 14 and an idler 15c, and moves in a circular motion in the direction of arrow D. The stuffed casing transfer unit 15 may be constituted by belts and pulleys.

Lugs 15d are provided in the chains 15a. As shown in FIGS. 3(B) and 3(C), each of the lugs 15d fits to the outer periphery 7A of the stuffed casing 7, thereby preventing radial runout of the stuffed casing 7, and retaining an interval F between the outer periphery 7A of the stuffed casing 7 and the adhesive application nozzle 22. Furthermore, the lugs 15d come into contact with the adhesive 21 applied to the outer periphery 7A of the rotating stuffed casing 7, and spread a part of the adhesive 21 along a circumferential direction G of the outer periphery 7A. In view of these, the desired number of the lugs 15d, each having a concave portion 15dd of a desired shape, are disposed in desired positions between the pincher members 13, 13.

Referring to FIGS. 1 and 4, the adhesive application unit 20 includes the adhesive application nozzle 22 which is the cylindrical member for applying the adhesive 21 to the outer periphery 7A of the stuffed casing 7, an adhesive discharge valve body 23 provided above the braking member rotating housing 11 and having the adhesive application nozzle 22 secured thereto, an adhesive pump 25 disposed on the main body housing 2 and pumping the adhesive 21 to the adhesive discharge valve body 23 via a duct 24, an adhesive tank 26 storing the adhesive 21 and communicated with the adhesive pump 25, and an air electromagnetic valve 27 for supplying driving air from an air source 28 to the adhesive discharge valve body 23.

The adhesive 21 is melted gelatin heated to 80 °C. Since the gelatin is edible, it can be used to produce the feed for large farmed fish such as tuna and young yellowtail, and the animal feed used, e.g., in a zoo without problems. Of course, an inedible adhesive may be employed to produce stuffed products other than feed and foodstuffs.

The adhesive application nozzle 22 is positioned over the stuffed casing 7 with the interval F therebetween. The nozzle 22 is located a predetermined distance H rearward from the discharge port 3b of the stuffing tube 3 positioned as shown in FIG. 7, and in front of the twisted portion 7a. Namely, the nozzle 22 is located at a position II between the discharge port 3b of the stuffing tube 3 and the rotating shafts 14 of the linking unit 12. The adhesive application nozzle 22 at the position II is in front of circular trajectories Q, Q drawn by the top portions 13a of the pair of the pincher members 13, 13 around the rotating shafts 14, and in the rear of an end portion 8a of the braking member 8. Thus, the adhesive 21 discharged from the adhesive application nozzle 22 can be applied to a portion 7a-2 where the twisted portion is to be formed as mentioned below.

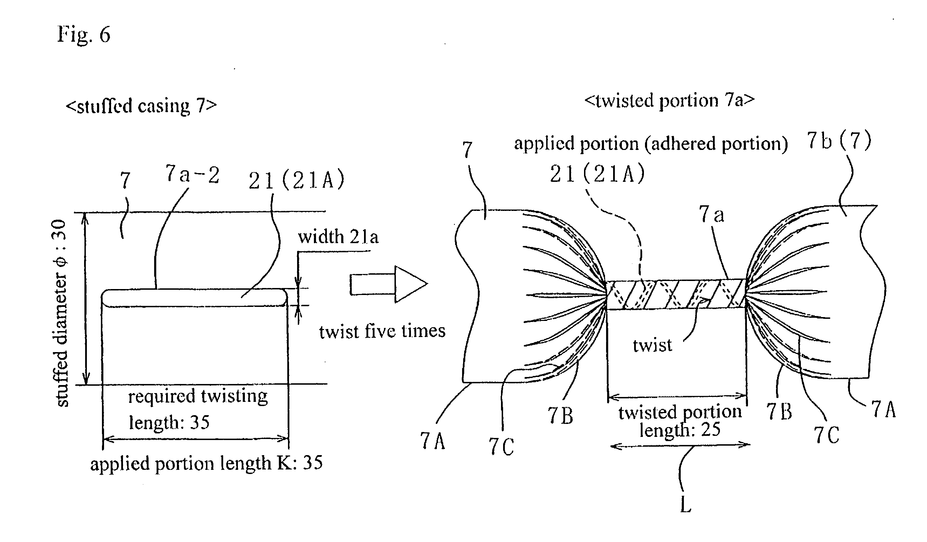

Referring to FIGS. 3 and 6, the adhesive 21 discharged from the adhesive application nozzle 22 forms an applied portion 21A having a predetermined width 21a and a predetermined thickness 21b on the outer periphery 7A of the stuffed casing 7. The width 21a or thickness 21b of the applied portion 21A is variable with a diameter d of the adhesive application nozzle 22 or a discharge pressure of the adhesive 21. Additionally, by making an opening of the adhesive application nozzle 22 rectangular, oval, or the like, the applied portion 21A having a larger width 21a can be formed.
The adhesive discharge valve body 23, duct 24, adhesive pump 25 and adhesive tank 26 are regulated in temperature so as to maintain a predetermined temperature of the gelatin, i.e., the adhesive 21.

The adhesive application unit 20 further includes an adhesive discharge controlling unit 29 for applying the adhesive 21 to the stuffed casing 7 intermittently. Referring to FIGS. 1 and 4, a numerical reference 29A designates a detection unit for detecting a rotation amount of the rotating shafts 14 of the linking unit 12, i.e., a traveling distance of the pincher members 13. The detection unit 29A includes a toothed disk 29A1 secured to the shaft 14A connecting the rotating shaft 14 with the motor shaft of the motor 12M, and a sensor 29A2 for detecting teeth of the toothed disk 29A1. A numerical reference 29B designates a programmable controller for outputting a signal S2 for activating the air electromagnetic valve 27 based on a detection signal S1 from the detection unit 29A. The programmable controller 29B also outputs a signal S3 for controlling the operation of the motor 12M for the linking unit.

Referring to FIG. 7, after the filling of the one casing 5 is completed, the programmable controller 29B stops the motor 12M for the linking unit so that the pincher members 13 stop at an original position III. Then, the programmable controller 29B outputs a signal indicating the pincher members 13 have transferred a distance between the original position III and the adhesive discharge start position IV. Next, the programmable controller 29B outputs a signal indicating that the pincher members 13 have transferred a distance between the adhesive discharge start position IV and the adhesive discharge end position V.

Referring to FIG. 4, the air electromagnetic valve 27 is opened by the signal S2 from the programmable controller 29B, and the driving air opens the adhesive discharge valve 23A provided within the adhesive discharge valve body 23 to discharge the adhesive 21 to the stuffed casing 7 from the adhesive application nozzle 22. The discharged adhesive 21 is applied to the portion 7a-2 that is to form the twisted portion 7a on the outer periphery 7A of the stuffed casing 7. Subsequently, the air electromagnetic valve 27 is closed by the signal S2 from the programmable controller 29B, and the discharge of the adhesive from the adhesive application nozzle 22 is completed.

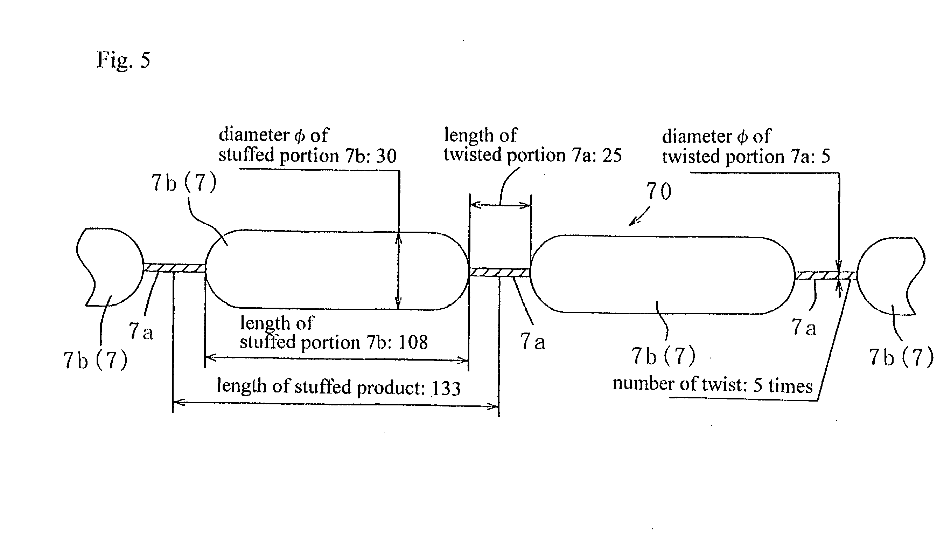

Next, the method for producing a chained stuffed product 70 linked by the twisted portions 7a as shown in FIG. 5 is described.

The filling tube 3 positioned as shown in FIG. 1 is moved toward the braking member 8. Fitted in the casing 5 retained in a predetermined position, the stuffing tube 3 is moved to the stuffing position shown in FIG. 2. The casing 5 on the stuffing tube 3 is engaged with the braking member 8. The pump 4 is driven, and at the same time, the linking unit 12 is driven. The linking unit 12 moves the formed stuffed casing 7 rearward.

The content is supplied from the pump 4 to the inside of the stuffing tube 3, discharged from the discharge port 3b at the distal end of the stuffing tube 3, and filled into the casing 5. Pinched by the left and right pair of the pincher members 13, 13 of the linking unit 12, the stuffed casing 7 is moved rearward in the direction A.

Referring to FIGS. 4-9, and 10, a method is described for producing a stuffed product where the adhesive 21 is applied only to the twisted portion 7a by applying the adhesive 21 linearly to only the portion 7a-2 forming the twisted portion 7a.

The apparatus shown in FIG. 4 discharges the adhesive 21 from the adhesive application nozzle 22 intermittently. After completing the application of the adhesive 21 to the stuffed casing 7, the present apparatus rotates the stuffing tube 3 and the braking member 8 in the direction of arrow R and forms the twisted portion 7a with respect to the squeezed portion 7a-1.

FIG. 4 shows the state of the adhesive 21 (adhesive applied portion 21A) applied to the portion 7a-2 newly forming the twisted portion 7a. The adhesive 21 is linearly applied because the stuffed casing 7 is not rotated. Subsequently, the rearmost end of the applied portion 21A is pinched by the left and right pair of the pincher members 13 (see FIG. 7).

When the rearmost end having the adhesive 21 applied thereto is pinched by the left and right pair of the pincher members 13, the portion having the adhesive 21 applied thereto is twisted five times and the twisted portion 7a is formed in the portion because the stuffed casing 7 is rotated. In the instance, the adhesive 21 is spirally wound in the twisted portion 7a, thereby adhering the twisted portion 7a from within the twisted portion 7a.

Referring to FIGS. 5-7, the operation of spirally winding the adhesive 21 inside the twisted portion 7a is described further in detail. The linking unit 12 is continuously rotated at a predetermined speed. The interval of the pincher members 13 etc. are set so that a stuffed length and a stuffed diameter of the stuffed casing 7 become 108mm and 30mm, respectively. The number of twists is set to five times. When the number of twists is five times, the length and the diameter of the twisted portion become 25mm and 5mm, respectively, and the length of the product becomes 133mm as shown in FIG. 5.

As shown in FIG. 6, when the spiral of the twisted portion having a length of 25mm (right figure) is untwisted, the length thereof is 35mm (left figure). Namely, in order to form the twisted portion 7a, the stuffed casing 7 having a length of 35mm is required. In order to wind the adhesive 21 inside the twisted portion 7a, the adhesive 21 needs to be applied to both end portions in a length of 35mm in the stuffed casing 7 having a stuffed length of 108mm.

The above procedure is described with reference to FIG. 7. The pincher members 13 which are provided in the linking unit 12 continuously rotating at a predetermined speed and which are to squeeze the stuffed casing 7 reach the predetermined position, i.e., the adhesive discharge start position IV. In this instance, the adhesive application nozzle 22 discharges the adhesive 21, and starts to apply the adhesive 21 to the outer periphery 7A of the stuffed casing 7 that is not rotating. Because the stuffed casing 7 is not rotating, the position where the adhesive is dropped is not likely to vary. As a result, the distance F between the stuffed casing 7 and the adhesive application nozzle 22 may be increased.

When the pincher members 13 reach a predetermined position, i.e., the adhesive discharge end position V, the adhesive application nozzle 22 stops discharging the adhesive 21. The adhesive applied portion 21A in a straight form is sequentially formed on the outer periphery 7A of the stuffed casing 7 at the same interval as the pincher interval E, i.e., the product length of 133mm. In this instance, the distance traveled by the pincher member 13, i.e., the distance between the adhesive discharge start position IV and the adhesive discharge end position V is equal to a length K of the adhesive applied portion, namely, 35mm.

A distance J between the position II of the adhesive application nozzle 22 and the squeezing position 1, namely, a traveling distance of the adhesive applied portion 21A is equal to the distance traveled by the pincher members 13 between the adhesive discharge start position IV and the squeezing position I. Thus, the adhesive applied portion 21A and the pincher members 13 reach the squeezing position I around the same time, and the pincher members 13 squeeze the rearmost end of the adhesive applied portion 21A to form the squeezed portion 7a-1.

When the application of the adhesive 21 is completed, the stuffing tube 3 and the braking member 8 start rotating, thereby rotating the stuffed casing 7. Subsequently, the formation of the twisted portion 7a is started in a position forward (arrow B direction) with respect to the squeezed portion 7a-1 formed as mentioned above. While the adhesive application nozzle 22 does not discharge the adhesive 21, the stuffed casing 7 rotates at a rotation speed at which the twisted portion7a is twisted five times.

The length K of the adhesive applied portion is set to be equal to the length of the casing used to form the twisted portion 7a, e.g., the casing length of 35mm to twist five times. Thus, the adhesive 21 is applied only to the twisted portion 7a. The length K of the adhesive applied portion may be longer than that of the stuffed casing 7 used to form the twisted portion 7a, or may be shorter as long as the twisted portion 7a does not untwist. Additionally, the number of twist is not limited to five times, and may be three or seven times, for example.

Next, the following describes the operation of winding the adhesive 21 applied to the outer periphery 7A of the stuffed casing 7 in the twisted portion 7a.

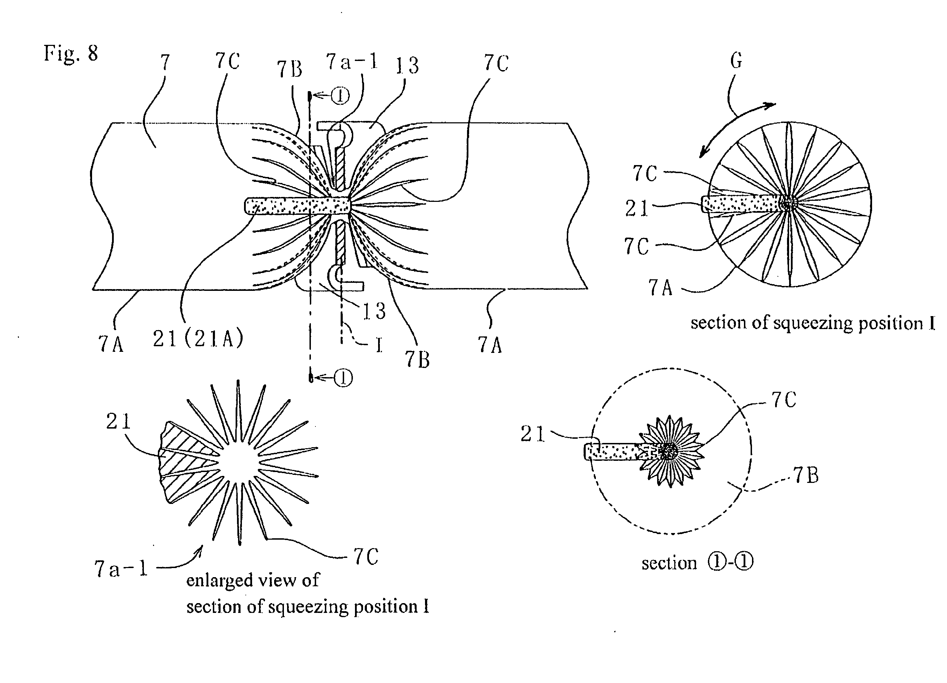

Referring to FIG. 8, when the pincher members 13 squeeze the stuffed casing 7 at the squeezing position I, a multiplicity of creases 7C are generated at the squeezed portion 7a-1 and the end portions 7B of the casing. The adhesive 21 1 applied to the outer periphery 7A of the stuffed casing 7 lies between the creases 7C, 7C in the squeezed portion 7a-1 and the end portion 7B.

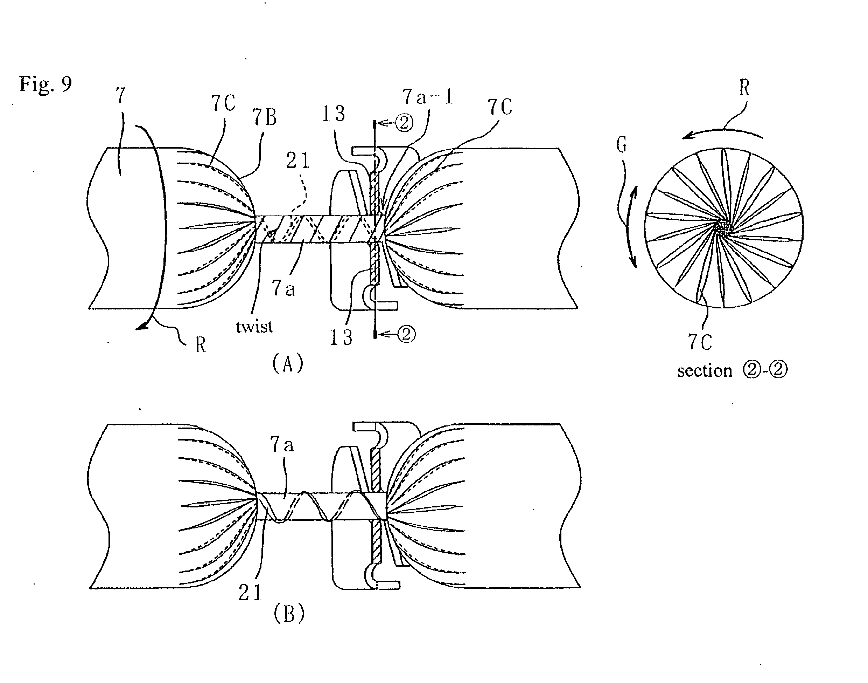

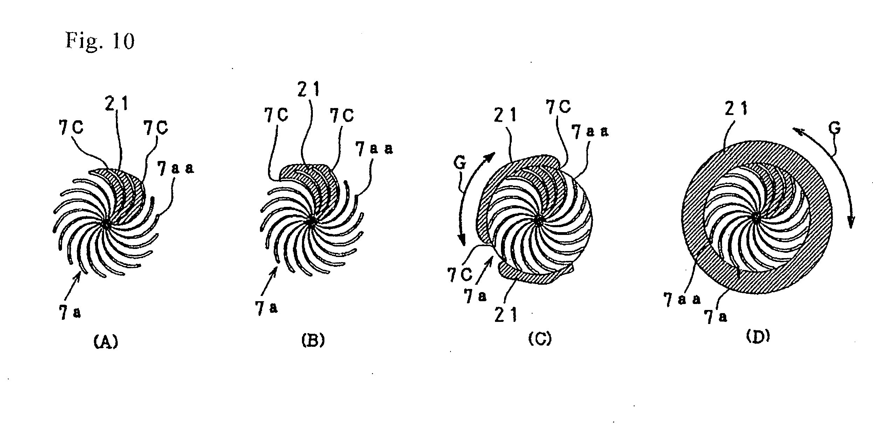

Referring to FIGS. 9 and 10, when the squeezed portion 7a-1 starts to be twisted in accordance with the rotation of the stuffed casing 7, each of the multiplicity (e.g., 20) of creases 7C in the squeezed portion 7a-1 is bent in a rotational direction (direction of arrow R), and starts to be folded on the other creases 7C adjacent each of the creases 7C with the adhesive 21 therebetween. The folded creases 7C, 7C beginning to form the twisted portion 7a are mutually faced each other in a bondable state. By twisting the squeezed portion 7a-1 in this manner, the adhesive 21 lying between the creases 7C, 7C of the squeezed portion 7a-1 are placed between the folded creases 7C, 7C within the twisted portion 7a (FIG. 10(A)).

Referring to FIGS. 9 and 10, since the stuffed casing 7 is rotated five times in the present embodiment, the casing in the end portion 7B of the stuffed casing 7 is twisted and squeezed based on the rotation of the stuffed casing 7 and sequentially changed to the twisted portion 7a. With the formation of the twisted portion 7a, the twisted portion 7a is increased in length. In the course thereof, the creases 7C in the end portion 7B are also bent and squeezed in the rotational direction (arrow R direction), and folded on the creases 7C adjacent thereto with the adhesive 21 therebetween, as in the case of the creases 7C of the squeezed portion 7a-1.

As mentioned above, the present apparatus causes the adhesive 21 applied to the outer periphery 7A of the stuffed casing 7 to be caught within the twisted portion 7a.

Depending on the amount of the adhesive 21 between the creases 7C, the size of the creases 7C, twisting strength, etc., the adhesive 21 is squeezed from the creases 7C in the course of the formation of the twisted portion 7a. FIGS. 9(B) and 10(B) illustrate the adhesive 21 covering the outer periphery 7aa of the twisted portion 7a along the spiral adhered portion 21 formed within the twisted portion 7a. The adhesive 21 adheres the twisted portion 7a from outside thereof.

Referring now to FIGS. 7, 10(C), and 10(D), examples are described wherein the stuffed product is produced by applying the adhesive 21 overflowed from between the creases 7C to the outer periphery 7A of the stuffed casing 7. The adhesive 21 adhered to the outer peripheries of the creases 7C formed by squeezing at the squeezing position I is rotated with the rotation of the stuffed casing 7, spread in the circumferential direction (direction of arrow G), and adhered to the outer periphery 7aa of the twisted portion 7a. The adhesive 21 covers the outer periphery 7aa of the twisted portion 7a, thereby bonding the twisted portion 7a.

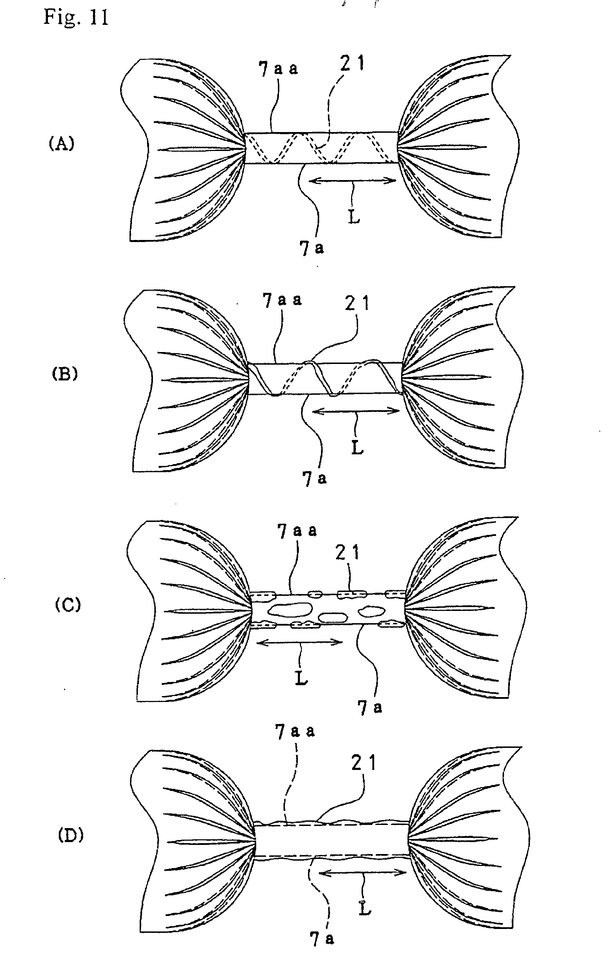

As shown in FIGS. 10 and 11, the states of application or adhesion of the adhesives 21 to the twisted portions 7a formed in accordance with the above-mentioned method may be outlined as follows.

FIGS. 10 show the adhesion state of the adhesives 21 in the twisted portions 7a in the outer peripheral direction (direction of arrow G).
FIG. 10(A) shows that the adhesive 21 inside the twisted portion 7a is hardly squeezed out of the twisted portion 7a, and is hardly attached to the outer periphery 7aa of the twisted portion 7a.
FIG. 10(B) shows that the adhesive 21 inside the twisted portion 7a is squeezed out of the twisted portion 7a, and is adhered to the outer periphery 7aa of the twisted portion 7a.
FIG. 10(C) shows that the adhesive 21 overflowed from the twisted portion 7a is unevenly distributed on the outer periphery 7aa of the twisted portion 7a.
FIG. 10(D) shows that the adhesive 21 overflowed from the twisted portion 7a is adhered to substantially the entire area of the outer periphery 7aa of the twisted portion 7a.

FIGS. 11 show the adhesion state of the adhesive 21 in the twisted portion 7a in the longitudinal direction (direction of arrow L).
FIG. 11(A) shows that the adhesive 21 inside the twisted portion 7a is hardly squeezed out of the twisted portion 7a, and is hardly attached to the outer periphery 7aa of the twisted portion 7a.
FIG. 11(B) shows that the adhesive 21 inside the twisted portion 7a is squeezed out of the twisted portion 7a, and is adhered to the outer periphery 7aa of the twisted portion 7a.
FIG. 11 (C) shows that the adhesive 21 overflowed from the twisted portion 7a is unevenly distributed on the outer periphery 7aa of the twisted portion 7a.
FIG. 11(D) shows that the adhesive 21 overflowed from the twisted portion 7a is adhered to substantially the entire area of the outer periphery 7aa of the twisted portion 7a.

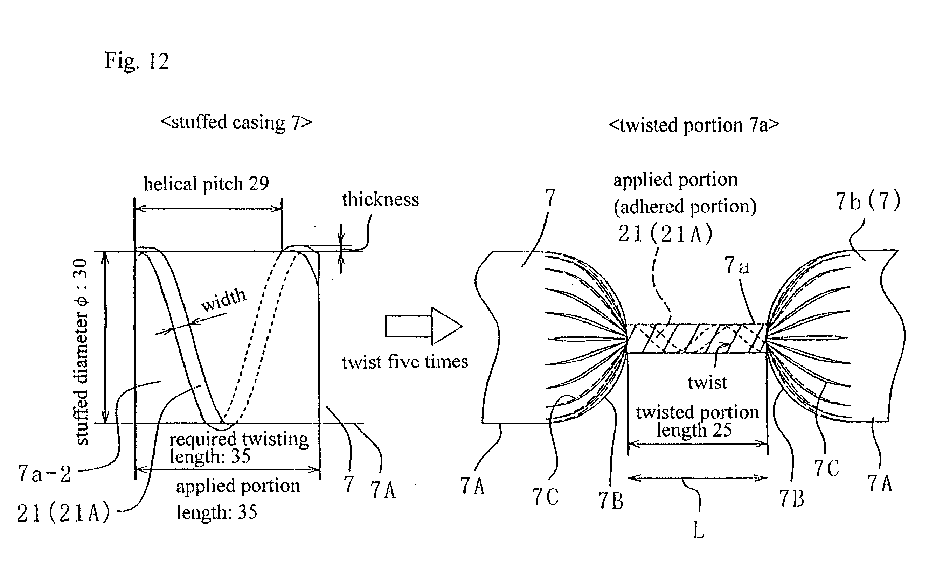

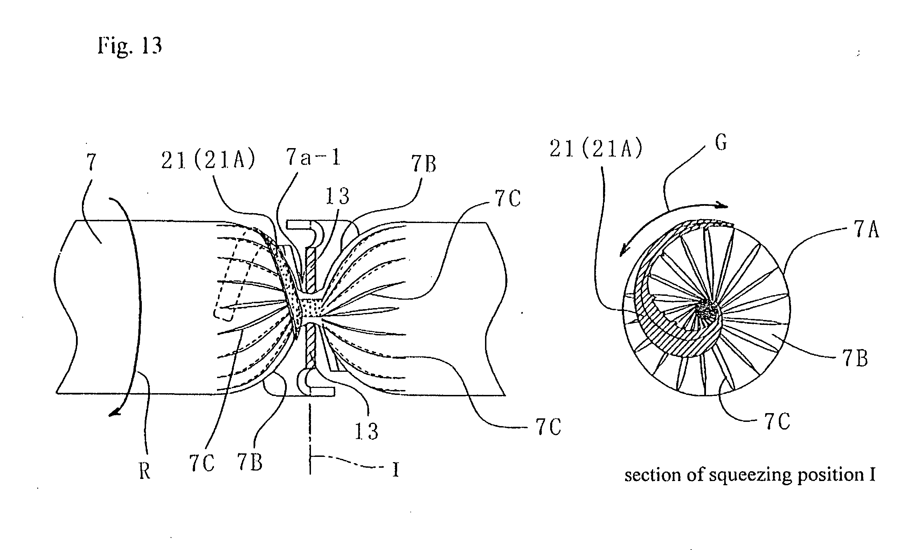

Next, referring to FIGS. 12 and 13, a method is described for producing a stuffed product where the adhesive 21 is applied only to the twisted portions 7a by applying the adhesive 21 spirally only to the portions 7a-2 which are to form the twisted portions 7a.

The stuffing tube 3 and the braking member 8 are rotated constantly and continuously. The adhesive 21 is discharged from the adhesive application nozzle 22 to the portion 7a-2 to form the twisted portion 7a. The length of the applied adhesive 21 is the same as that of the above-mentioned embodiment shown in FIG. 6, namely, 35mm. The adhesive applied portion 21A in spirals is formed on the outer periphery 7A of the stuffed casing 7 continuously rotating at a predetermined rotation speed and moving at a predetermined speed.

In this embodiment, a helical pitch is about 29mm. Thus, as shown in the figure, the spiral adhesive applied portion 21A having 1.25 turns of the helix is formed in the portion 7a-2. The helical pitch is determined by the length of the stuffed product (the interval E) and the number of twists of the twisted portion 7a.

The embodiment also has substantially the same operation as the above-mentioned embodiment. Namely, when the pincher members 13, 13 reach the squeezing position I shown in FIG. 7, the stuffed casing 7 is squeezed by the pincher members 13 and the squeezed portion 7a-1 is formed as shown in FIG. 13. Meanwhile, the stuffed casing 7 is rotated constantly and continuously, and thus the formed squeezed portion 7a-1 has already started to be twisted. The rotating stuffed casing 7 further twists the squeezed portion 7a-1, thereby forming the twisted portion 7a. The adhesive 21 is applied within the twisted portion 7a continuously in a spiral form, and a joint area is formed. In this embodiment, the outer periphery 7aa of the twisted portion 7a may be covered with the adhesive 21 in substantially the same manner as the examples shown in FIGS. 9(B), 10(B)-10(D), and 11(B)-11(D).

In this embodiment, the adhesive applied portion 21A is formed spirally, and the application length of the adhesive 21 is longer than the above-mentioned embodiment. As a result, adhesive strength of the adhesive 21 is enhanced.

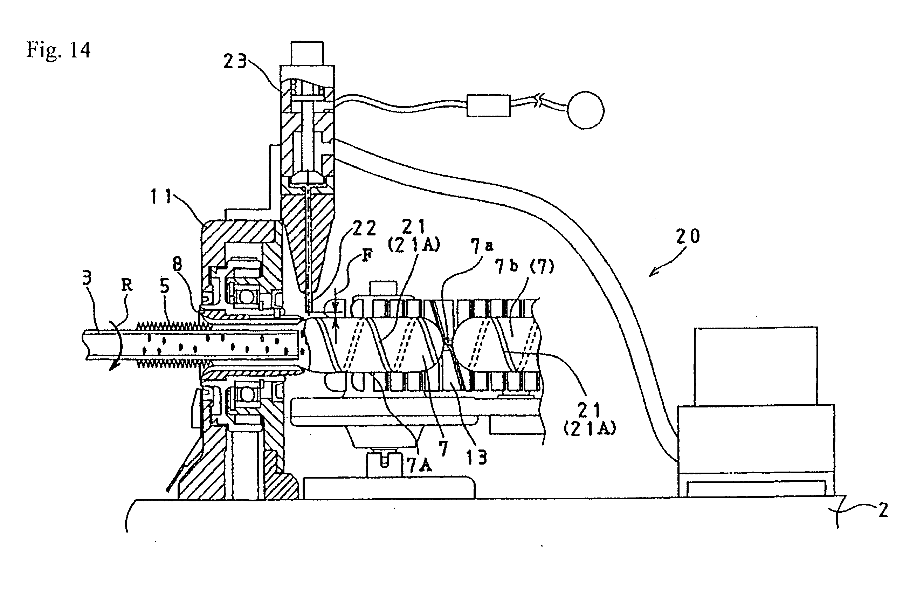

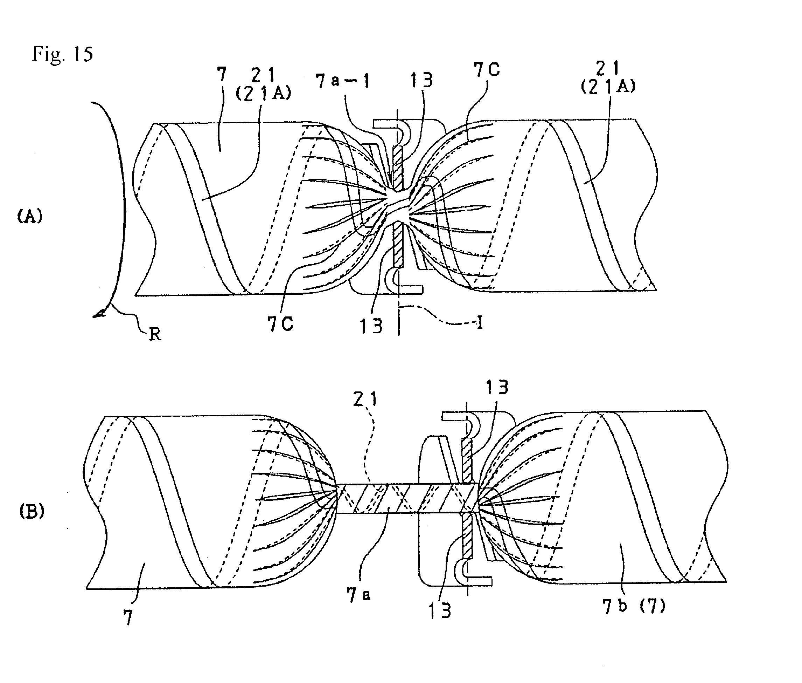

The above-mentioned two methods are to produce the stuffed product having the adhesive 21 applied only to the twisted portions 7a. Next, referring to FIGS. 14 and 15, a method is described for producing a stuffed product in which the adhesive 21 is applied to the twisted portions 7a and the stuffed portions 7b.

The stuffing tube 3 and the braking member 8 are rotated constantly and continuously. The adhesive 21 is always discharged from the adhesive application nozzle 22 continuously. As shown in FIG. 14, the adhesive 21 is spirally applied to the outer periphery 7A of the stuffed casing 7 at a helical pitch of about 29mm that is the same helical pitch as the examples shown in FIGS. 10. In this embodiment, the adhesive 21 is applied spirally to the overall length of the stuffed portion 7b. However, there is no problem if farmed fish or animals eat the adhesive since the adhesive is edible. In the present embodiment, the apparatus is simply structured because the adhesive discharge controlling unit 29 is not required.

This embodiment also has substantially the same operation as the above-mentioned embodiment where the stuffing tube 3 and the braking member 8 are rotated constantly and continuously. Namely, the end portion 7B of the stuffed casing 7 rotating in the direction of arrow R is sequentially twisted and squeezed, and the length of the twisted portion 7a is increased. In this manner, a continuous spiral joint area (applied portion) is formed within the twisted portion 7a. In this embodiment, the outer periphery 7aa of the twisted portion 7a may be covered with the adhesive 21.

Next, a stuffed product separating device 30 shown in FIG. 1 is described. The stuffed product separating device 30 serves to separate the stuffed product 70 into individual stuffed products 70A, the stuffed product 70 being produced by the stuffed product producing apparatus 1 and linked by the twisted portions 7a. The stuffed product separating device 30 includes a first conveyor 31 and a second conveyor 32 for moving the stuffed product 70 at the same speed as the linking unit 12, and a cutting blade 33 for cutting the twisted portions 7a by passing between the first and the second conveyors 31, 32. The cutting blade 33 is driven in synchronization with the linking unit 12 so as to cut middle portions of the twisted portions 7a.

The twisted portions 7a of the individually separated stuffed products 70A do not untwist because the adhesive 21 is applied thereto. As a result, the fluid content does not leak from the twisted portions 7a.

The stuffed product separating device 30 is not limited to the present embodiment. For example, a linking apparatus disclosed in Japanese Patent Application Publication No. 2001-54352 may be used to manufacture the separate stuffed products 70A. This publicly known apparatus forms the twisted portion 7a, and cuts off the twisted portion 7a immediately after the formation thereof.

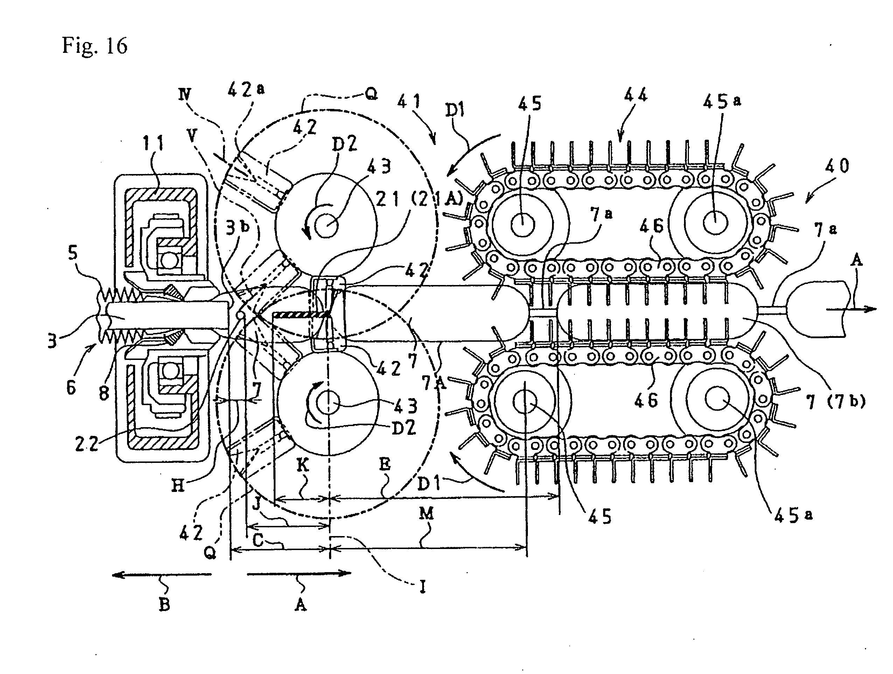

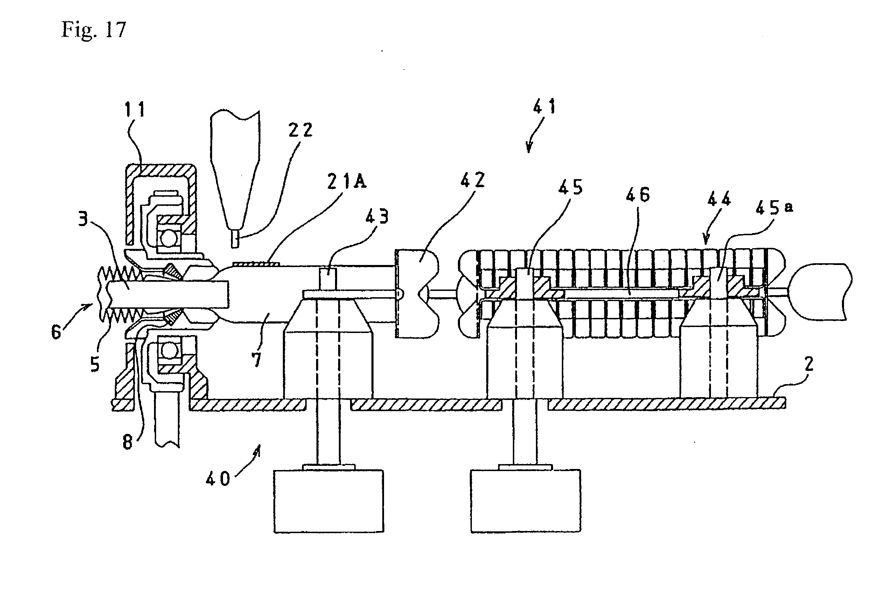

FIGS. 16 and 17 show another apparatus 40 for producing a stuffed product having twisted portions. The present apparatus 40 is provided with a linking unit 41. The linking unit 41 includes the stuffing tube 3 having the discharge port 3b through which the content is discharged into the casing 5, the adhesive application nozzle 22 positioned in the rear (in the content discharging direction or direction of arrow A) of the discharge port 3b and applying the adhesive 21 to the outer periphery 7A of the stuffed casing 7, the stuffed casing rotating unit 6 having the stuffing tube 3 and the braking member 8 and rotating the stuffed casing 7 to which the adhesive 21 is applied, a left and right pair of rotating shafts 43, 43 positioned in the rear (content discharging direction) of the adhesive application nozzle 22, a left and right pair of pincher members 42, 42 rotating about the rotating shafts 43, 43 and squeezing the stuffed casing 7, and a stuffed casing transfer unit 44 transferring the stuffed easing 7 to the rear and having a pair of rotating shafts (rotating drive shafts) 45, 45 provided a predetermined distance M rearward (in the content discharging direction) with respect to the rotating shafts 43. The arrows D2 show rotational directions of the left and right pair of the rotating shafts 43, 43.

The positional relationship of the discharge port 3b of the stuffing tube 3, the circular trajectories Q of the top portions 42a of the pincher members 42, the rotating shafts 43, the adhesive application nozzle 22, the adhesive discharge start position IV, and the adhesive discharge stop position V is the same as that of the apparatus 1.

The stuffed casing transfer unit 44 includes endless transmission members 46, 46 having a left and right pair of chains or belts continuously circulating around the rotating drive shafts 45 and idler shafts 45a in the directions of arrows D1 at a predetermined speed. The pair of the endless transmission members 46, 46 holds the stuffed casing 7 (stuffed portion 7b) therebetween, and moves the stuffed casing 7 to the rear of the discharge end 3b (in the direction of arrow A) at a predetermined speed.

The stuffed casing 7 moving at a predetermined speed is pinched by the pincher members 42 with a cycle that forms a stuffed product having a length corresponding to the interval E of the apparatus 1. The adhesive application nozzle 22 discharges the adhesive 21 with the same cycle as that of the apparatus 1, and forms the adhesive applied portion 21A having the length K on the outer periphery 7A of the stuffed casing 7 at the interval E. In this manner, the twisted portion 7a to which the adhesive 21 is applied is formed as in the case of the apparatus 1.

As in the case of the apparatus 1 in the above embodiment, the present apparatus 40 is capable of applying the adhesive 21 to the twisted portion to cover the outer peripheries 7aa of the twisted portions 7a with the adhesive 21 as well as to wind the adhesive 21 in the twisted portions 7a. Furthermore, the apparatus 40 is capable of producing the stuffed product with the adhesive applied only to the twisted portions 7a as well as the stuffed product with the adhesive applied to both of the twisted portions 7a and the stuffed portion 7b.

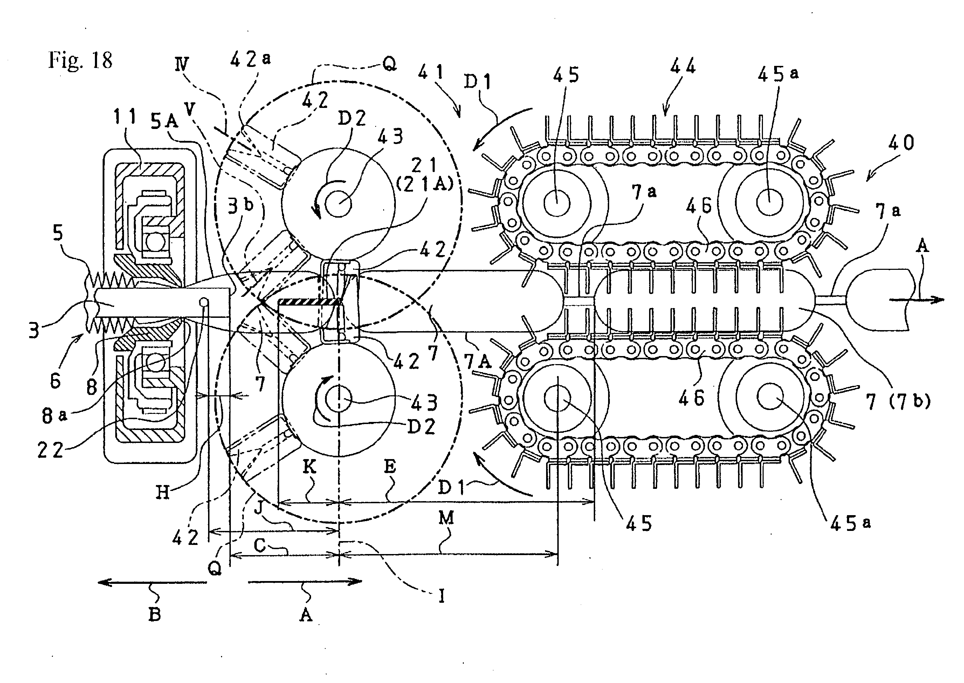

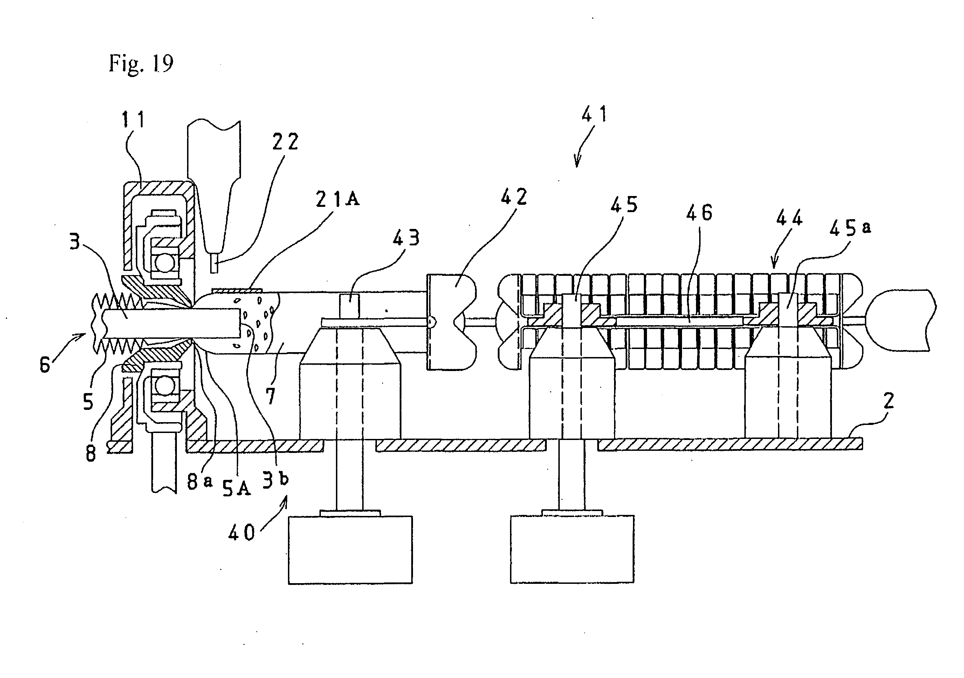

A modified embodiment of the apparatus 40 is illustrated in FIGS. 18 and 19. The adhesive application nozzle 22 in the modified embodiment is moved in the opposite content discharging direction from the position of the adhesive application nozzle 22 in the apparatus 40 shown in FIGS. 16 and 17. The adhesive application nozzle 22 in the modified embodiment is provided over the casing 5 which has yet to be filled with the content and in the direction of arrow B by the predetermined distance H from the discharge port 3b of the stuffing tube 3. In the embodiment, while the adhesive is applied to an outer periphery 5A of the casing 5, the content is filled into the casing 5 having the adhesive applied thereto. In this manner, the adhesive is applied to the outer periphery 7A of the stuffed casing 7.

Any of the above-mentioned embodiments has operation and effect as described below.
After the adhesive 21 is applied to the outer periphery 7A of the stuffed casing 7 having a diameter sufficiently larger than that of the twisted portion 7a, the stuffed casing 7 is squeezed and twisted at the portion having the adhesive 21 , applied thereto, and thereby the twisted portion 7a is formed. Thus, the twisted portion 7a can be formed to which the adhesive 21 is applied in the peripheral direction (direction of arrow G) and the longitudinal direction (direction of arrow L).

As a result, the twisted portion7a is formed by applying the adhesive 21 only to one portion in the outer periphery 7A of the stuffed casing 7 from the adhesive application nozzle 22. Thus, the apparatus has a simple structure.
The adhesive 21 is applied to the outer periphery 7A of the stuffed casing 7 having a diameter sufficiently larger than that of the twisted portion 7a. Thus, it is not necessary to determine a discharge target position from the adhesive application nozzle 22 precisely.
As a result, the radial runout of the stuffed casing 7 can be large, and thus application of the adhesive can be carried out at a high speed.

### INDUSTRIAL APPLICABILITY

The methods for producing a stuffed product having twisted portions and apparatuses for producing the same according to the present invention are capable of forming the twisted portion having the adhesive applied thereto at a high speed, and are applicable to high-speed production of feed for, e.g., farmed fish.

## Claims

1. A method for producing a stuffed product having twisted portions, the method comprising the steps of:
discharging a content from a stuffing tube and stuffing the content into an edible casing; and
moving a stuffed casing stuffed with the content in a content discharging direction;
**characterized by**
intermittently applying an edible adhesive to a part to form a twisted portion on an outer periphery of the stuffed casing;
squeezing the stuffed casing having the adhesive applied thereto; and
rotating the stuffed casing having the adhesive applied thereto, thereby forming the twisted portion having the applied adhesive wound therein in the squeezed stuffed casing.

2. The method as defined in claim 1, wherein the casing comprises collagen or carrageenan, and the adhesive used in the step of intermittently applying the adhesive is gelatin melted by heating.

3. The method as defined in claim 1 or 2, wherein in the step of forming the twisted portion, at least a part of an outer periphery of the twisted portion is covered with at least a part of the adhesive applied to the outer periphery of the stuffed casing.

4. The method as defined in claim 1,2, or 3, wherein the adhesive discharged from an adhesive application nozzle is controlled in temperature, thereby maintaining a predetermined temperature.

5. An apparatus for producing a stuffed product having twisted portions, the apparatus comprising:
a stuffing tube for discharging a content into an edible casing;
an adhesive application nozzle for intermittently applying an edible adhesive to a part to form a twisted portion on an outer periphery of a stuffed casing stuffed with the content;
a stuffed casing rotating unit for rotating the stuffed casing having the adhesive applied thereto; and
a linking unit having rotating shafts, pincher members, and a stuffed casing transfer unit, the rotating shafts being provided at positions located in a content discharging direction with respect to the adhesive application nozzle, the pincher members being adapted to rotate about the rotating shafts and to squeeze the stuffed casing, and the stuffed casing transfer unit being adapted to move the stuffed casing in the content discharging direction;
whereby the twisted portion having the applied adhesive wound therein is formed in a squeezed portion of the stuffed casing formed by the pincher members.

6. The apparatus as defined in claim 5 comprising an adhesive application nozzle for discharging the adhesive and means for controlling the temperature of the adhesive.

## Patentansprüche

1. Verfahren zum Herstellen eines gefüllten Produkts mit verdrehten Abschnitten, mit den folgenden Verfahrensschritten:
Ausgeben eines Inhalts aus einem Füllrohr und Einfüllen des Inhalts in einen essbaren Behälter und
Bewegen des gefüllten Behälters, der mit dem Inhalt gefüllt ist, in eine Inhaltausgaberichtung,
**gekennzeichnet durch**
intermittierende Zugabe eines essbaren Klebstoffs zu einem Teil, um einen verdrehten Abschnitt auf dem äußeren Umfang des gefüllten Behälters zu bilden,
Zusammendrücken des gefüllten Behälters, auf dem der Klebstoff aufgetragen worden ist, und
Drehen des gefüllten Behälters, auf den der Klebstoff aufgetragen worden ist, um den verdrehten Abschnitt zu bilden, in dem der aufgetragene Klebstoff im zusammengedrückten, gefüllten Behälter eingewickelt ist.

2. Verfahren nach Anspruch 1, wobei der Behälter Kollagen oder Carrageen aufweist und wobei der in dem Schritt zum intermittierenden Auftragen des Klebstoffs verwendete Klebstoff Gelatine ist, die durch Erwärmen geschmolzen ist.

3. Verfahren nach Anspruch 1 oder 2, wobei in dem Schritt zum Ausbilden des verdrehten Abschnitts zumindest ein Teil eines äußeren Umfangs des verdrehten Abschnitts mit zumindest einem Teil des Klebstoffs bedeckt ist, der auf dem Außenumfang des gefüllten Behälters aufgetragen ist.

4. Verfahren nach Anspruch 1, 2 oder 3, wobei die Temperatur des von einer Klebstoffauftragsdüse abgegebenen Klebstoffs gesteuert wird, um eine vorgegebene Temperatur aufrechtzuerhalten.

5. Vorrichtung zum Erzeugen eines gefüllten Produkts mit verdrehten Abschnitten, mit:
einem Füllrohr zum Ausgeben eines Inhalts in einen essbaren Behälter,
einer Klebstoffauftragsdüse zum intermittierenden Auftrag eines essbaren Klebstoffs auf einen Teil, um einen verdrehten Abschnitt auf einem äußeren Umfang eines gefüllten Behälters auszubilden, der mit dem Inhalt gefüllt ist,
einer Dreheinheit zum Drehen des gefüllten Behälters mit darauf aufgetragenem Klebstoff und
einer Verbindungseinheit mit Drehwellen, Wellenelementen und einer Übertragungseinheit für gefüllte Behälter, wobei die Drehwellen an Stellen vorgesehen sind, die in einer Inhaltsausgaberichtung bezüglich der Klebstoffauftragsdüse angeordnet sind, wobei die Wellenelemente um die Drehwellen drehbar und zum Zusammendrücken des gefüllten Behälters ausgebildet sind, und wobei die Übertragungseinheit dafür eingerichtet ist, den gefüllten Behälter in der Inhaltsausgaberichtung zu bewegen,
wobei der verdrehte Abschnitt, in dem der aufgetragene Klebstoff eingewickelt ist, in einem zusammengedrückten Abschnitt des gefüllten Behälters ausgebildet ist, der durch die Drehelemente gebildet wird.

6. Vorrichtung nach Anspruch 5 mit einer Klebstoffauftragsdüse zum Ausgeben des Klebstoffs und einer Einrichtung zum Steuern der Temperatur des Klebstoffs.

## Revendications

1. Procédé de production d'un produit farci présentant des parties torsadées, ledit procédé comprenant les étapes suivantels :
sortie du contenu d'un tuyau de remplissage et chargement du contenu dans une enveloppe comestible ; et
déplacement d'une enveloppe remplie de contenu dans une direction de sortie du contenu ;
**caractérisé par**
l'application intermittente d'un adhésif comestible sur une partie pour former une partie torsadée d'une périphérie extérieure de l'enveloppe remplie ;
étirage de l'enveloppe remplie avec l'adhésif appliqué sur celle-ci ; et
rotation de l'enveloppe remplie avec l'adhésif appliqué sur celle-ci pour former la partie torsadée avec l'adhésif appliqué entortillé à l'intérieur de l'enveloppe remplie étirée.

2. Procédé selon la revendication 1, où l'enveloppe contient du collagène ou du carraghénane, et où l'adhésif utilisé lors de l'étape d'application intermittente de l'adhésif est de la gélatine fondue à la chaleur.

3. Procédé selon la revendication 1 ou la revendication 2, où lors de l'étape de formation de la partie torsadée, au moins une partie d'une périphérie extérieure de la partie torsadée est revêtue d'au moins une partie de l'adhésif appliqué sur la périphérie extérieure de l'enveloppe remplie.

4. Procédé selon la revendication 1, la revendication 2 ou la revendication 3, où la température de l'adhésif sortant d'une buse d'application de l'adhésif est commandée de manière à maintenir une température définie.

5. Appareil pour la production d'un produit farci présentant des parties torsadées, ledit appareil comprenant :
un tuyau de remplissage destiné à charger un contenu dans une enveloppe comestible ;
une buse d'application d'adhésif pour une application intermittente d'un adhésif comestible sur une partie de manière à former une partie torsadée sur une périphérie extérieure d'une enveloppe farcie, chargée de contenu ;
une unité de rotation d'enveloppe remplie pour mettre en rotation l'enveloppe remplie avec l'adhésif appliqué sur celle-ci ; et
une unité de liage pourvue d'arbres rotatifs, des éléments de préhension, et une unité de transfert d'enveloppe remplie, les arbres rotatifs étant prévus à des emplacements dans une direction de sortie du contenu par rapport à la buse d'application d'adhésif, les éléments de préhension étant prévus pour tourner autour des arbres rotatifs et
pour étirer l'enveloppe remplie, et l'unité de transfert d'enveloppe remplie étant prévue pour déplacer l'enveloppe remplie dans la direction de sortie du contenu ;
la partie torsadée avec l'adhésif entortillé à l'intérieur étant formée sur un tronçon étiré de l'enveloppe remplie obtenu par les éléments de préhension.

6. Appareil selon la revendication 5, comprenant une buse d'application d'adhésif pour la sortie de l'adhésif et un moyen de commande de la température de l'adhésif.
